# EUROPEAN PATENT APPLICATION

(11) **EP 4 346 319 A1**
(43) Date of publication of application: **03.04.2024**
(21) Application number: 23198583.9
(22) Date of filing: 20.09.2023
(51) Int. Cl.: H04W 74/0833, H04W 24/02, H04W 24/10

(54) **RANDOM ACCESS IN CELLULAR COMMUNICATION NETWORKS**

(30) Priority: 30.09.2022 FI 20225864
(71) Applicant: Nokia Technologies Oy, 02610 Espoo (FI)
(72) Inventor: AHMADIAN TEHRANI, Amir Mehdi, Munich (DE); MASO, Marco, Issy les Moulineaux (FR); LASELVA, Daniela, Klarup (DK); MUELLER, Axel, Massy (FR); NHAN, Nhat-Quang, Reims (FR)
(74) Representative: Nokia EPO representatives

(57) **Abstract**

According to an example aspect of the present disclosure, there is provided an apparatus comprising means for determining that a random access procedure with a wireless network node was unsuccessful, means for storing, after said determining, a random access channel experience report, wherein the random access channel experience report comprises information about the unsuccessful random access procedure and means for transmitting, after determining that another random access procedure with the wireless network node was successful, the random access channel experience report to the wireless network node for configuring at least one coverage enhancement feature.

## Description

### FIELD

Various example embodiments relate in general to cellular communication networks and more specifically, to random access in such systems.

### BACKGROUND

Random access may be used to access a wireless communication network, e.g., to request a dedicated connection to be arranged for a wireless terminal requesting the access. Random access may be used for example in various cellular communication networks, such as, in cellular communication networks operating according to 5G radio access technology. 5G radio access technology may also be referred to as New Radio, NR, access technology. 3rd Generation Partnership Project, 3GPP, develops standards for 5G/NR. In general, there is a need to provide enhanced methods, apparatuses and computer programs related to random access in cellular communication networks. Such enhancements may also be beneficial in other wireless communication networks, such as in 6G networks in the future, as well.

### SUMMARY

According to some aspects, there is provided the subject-matter of the independent claims. Some example embodiments are defined in the dependent claims.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to a first aspect of the present disclosure, there is provided an apparatus comprising means for determining that a random access procedure with a wireless network node was unsuccessful, means for storing, after said determining, a random access channel experience report, wherein the random access channel experience report comprises information about the unsuccessful random access procedure and means for transmitting, after determining that another random access procedure with the wireless network node was successful, the random access channel experience report to the wireless network node for configuring at least one coverage enhancement feature. The apparatus of the first aspect may be a user equipment or a control device configured to control the functioning thereof, possibly when installed therein.

Example embodiments of the first aspect may comprise at least one feature from the following bulleted list or any combination of the following features:
- the apparatus further comprises means for determining, after said storing, that a triggering criterion for transmitting the random access channel experience report is met before the apparatus is moved to a Radio Resource Control, RRC, connected mode and wherein said means for transmitting comprises means for transmitting the random access channel experience report when the apparatus is in the RRC connected mode;
- wherein the random access channel experience report is transmitted via RRC signalling or in a Medium Access Control Control Element, MAC CE;
- wherein the triggering criterion is met when: the random access procedure was detected as unsuccessful and a need for said another random access procedure is detected or downlink control information is received from the wireless network node, said downlink control information indicating that the triggering criterion is met or it is determined that a number of unsuccessful random access procedures is greater than a threshold;
- means for receiving a configuration from the wireless network node, the configuration configuring the triggering criterion for transmitting the random access channel experience report;
- the apparatus further comprises means for indicating, to the wireless network node, that the random access channel experience report is available;
- said means for determining that the random access procedure with the wireless network node was unsuccessful further comprises means for determining that a transmission of a random access preamble was not successful, and the apparatus further comprises: means for receiving in a random access response during said another random access procedure, from the wireless network node, a coverage enhancement configuration for transmission of a connection request and means for transmitting, to the wireless network node, the connection request using the coverage enhancement configuration;
- wherein said means for determining that the random access procedure with the wireless network node was unsuccessful further comprises means for determining that a transmission of a connection request was not successful, and the apparatus further comprises: means for receiving in downlink control information, from the wireless network node, a coverage enhancement configuration for transmission of another connection request and means for transmitting, to the wireless network node, said another connection request using the coverage enhancement configuration;
- wherein the random access channel experience report comprises a random access channel index, number of preambles transmitted, information related to repetition of a connection request, power ramp-up range, energy per resource element and/or information related to spectral shaping;
- wherein the random access procedure is a 4-step random access procedure, wherein a first message of the random access procedure comprises a random access preamble and a third message of the random access procedure comprises a connection request;
- wherein said means for determining that the random access procedure with the wireless network node was unsuccessful comprises means for determining that the random access procedure with the wireless network node was recurrently unsuccessful;
- wherein the apparatus is a User Equipment, UE, or a control device configured to control functioning of the UE.

According to a second aspect of the present disclosure, there is provided an apparatus comprising means for receiving a random access channel report from a user equipment, wherein the random access channel experience report comprises information about an unsuccessful random access procedure with the user equipment and means for deciding whether to configure at least one coverage enhancement feature based on the random access channel experience report. The apparatus of the second aspect may be a wireless network node or a control device configured to control the functioning thereof, possibly when installed therein.

According to a third aspect, there is provided a first method comprising, determining, by an apparatus, that a random access procedure with a wireless network node was unsuccessful, storing by the apparatus, after said determining, a random access channel experience report, wherein the random access channel experience report comprises information about the unsuccessful random access procedure and transmitting by the apparatus, after determining that another random access procedure with the wireless network node was successful, the random access channel experience report to the wireless network node for configuring at least one coverage enhancement feature. The first method may be performed by a user equipment or a control device configured to control the functioning thereof, possibly when installed therein. That is, the apparatus of the first method may be a user equipment or a control device configured to control the functioning thereof, possibly when installed therein.

According to a fourth aspect, there is provided a second method comprising, receiving, by an apparatus, a random access channel report from a user equipment, wherein the random access channel experience report comprises information about an unsuccessful random access procedure with the user equipment and deciding, by the apparatus, whether to configure at least one coverage enhancement feature based on the random access channel experience report. The second method may be performed by a wireless network node or a control device configured to control the functioning thereof, possibly when installed therein.

According to a fifth aspect of the present disclosure, there is provided an apparatus comprising at least one processing core, at least one memory including computer program code, the at least one memory and the computer program code being configured to, with the at least one processing core, cause the apparatus at least to determine that a random access procedure with a wireless network node was unsuccessful, store, after said determining, a random access channel experience report, wherein the random access channel experience report comprises information about the unsuccessful random access procedure and transmit, after determining that another random access procedure with the wireless network node was successful, the random access channel experience report to the wireless network node for configuring at least one coverage enhancement feature. The apparatus of the fifth aspect may be a user equipment or a control device configured to control the functioning thereof, possibly when installed therein.

According to a sixth aspect of the present disclosure, there is provided an apparatus comprising at least one processing core, at least one memory including computer program code, the at least one memory and the computer program code being configured to, with the at least one processing core, cause the apparatus at least to receive a random access channel report from a user equipment, wherein the random access channel experience report comprises information about an unsuccessful random access procedure with the user equipment and decide whether to configure at least one coverage enhancement feature based on the random access channel experience report. The apparatus of the second aspect may be a wireless network node or a control device configured to control the functioning thereof, possibly when installed therein.

According to a seventh aspect of the present disclosure, there is provided a non-transitory computer readable medium having stored thereon a set of computer readable instructions that, when executed by at least one processor, cause an apparatus to at least to perform the first method. According to an eighth aspect of the present disclosure, there is provided a non-transitory computer readable medium having stored thereon a set of computer readable instructions that, when executed by at least one processor, cause an apparatus to at least to perform the second method.

According to a ninth aspect of the present disclosure, there is provided a computer program comprising instructions which, when the program is executed by an apparatus, cause the apparatus to carry out the first method. According to a tenth aspect of the present disclosure, there is provided a computer program comprising instructions which, when the program is executed by an apparatus, cause the apparatus to carry out the second method.

### BRIEF DESCRIPTION OF THE DRAWINGS

FIGURE 1 illustrates an example of a network scenario in accordance with at least some example embodiments;
FIGURE 2 illustrates a 4-step RACH procedure in accordance with at least some example embodiments;
FIGURE 3 illustrates a first signalling graph in accordance with at least some example embodiments;
FIGURE 4 illustrates a second signalling graph in accordance with at least some example embodiments;
FIGURE 5 illustrates an example apparatus capable of supporting at least some example embodiments;
FIGURE 6 illustrates a flow graph of a first method in accordance with at least some example embodiments.

### EXAMPLE EMBODIMENTS

Random access may be enhanced by the procedures described herein. More specifically, random access may be enhanced by making it possible for a User Equipment, UE, to assess its overall experience and/or quality during a random access procedure, such as a 4-step Random Access Channel, RACH, procedure. Moreover, in case of an unsuccessful random access procedure the LTE may further enable improving an upcoming random access procedure by transmitting a random access channel experience report to a wireless network node.

The UE may store the random access channel experience report when the unsuccessful random access procedure is detected and then transmit the report to the wireless network node after determining that another random access procedure was successful. Said another random access procedure may be subsequent to, i.e., performed after, the unsuccessful procedure. Thus, the wireless network node may take the random access channel experience report into account for example when optimizing resource allocation for upcoming random access procedures.

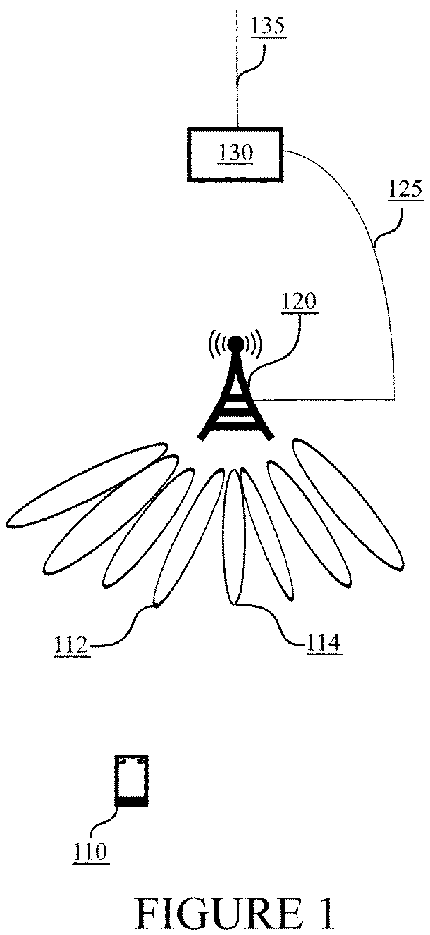

FIGURE 1 illustrates an example of a network scenario in accordance with at least some example embodiments. According to the example scenario of FIGURE 1, there may be a beam-based wireless communication system, which comprises UE 110, wireless network node 120 and core network element 130. UE 110 may be connected to wireless network node 120 via air interface using beams 112 and 114, either simultaneously or one at a time.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal. In the example system of FIGURE 1, LTE 110 may communicate wirelessly with wireless network node 120 for example via beam 112 and/or beam 114. Wireless network node 120 may be considered as a serving node for LTE 110 and one cell of wireless network node 120 may be a serving cell for LTE 110.

Air interface between UE 110 and wireless network node 120 may be configured in accordance with a Radio Access Technology, RAT, which both LTE 110 and wireless network node 120 are configured to support. Examples of cellular RATs include Long Term Evolution, LTE, New Radio, NR, which may also be known as fifth generation, 5G, radio access technology and MulteFire.

For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In any case, example embodiments of the present disclosure are not restricted to any particular wireless technology. Instead, example embodiments may be exploited in any wireless communication system, wherein random access with at least one Coverage Enhancement, CE, feature is used.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

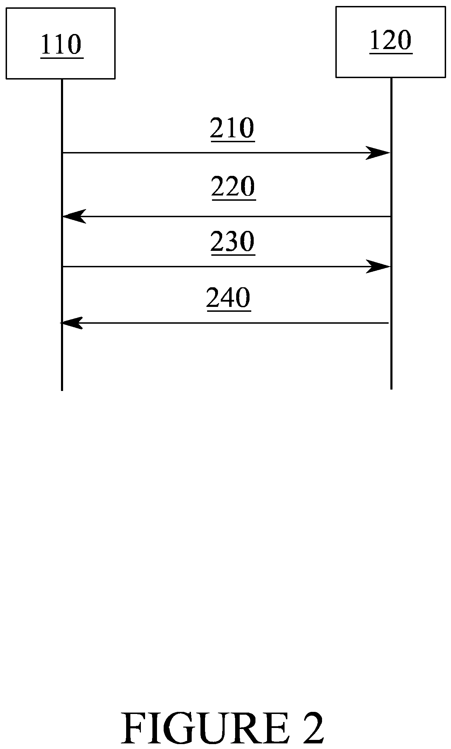

FIGURE 2 illustrates a 4-step RACH procedure in accordance with at least some example embodiments. On the vertical axes are disposed, from the left to the right, UE 110 and wireless network node 120 of FIGURE 1. Time advances from the top towards the bottom.

At step 210, UE 110 may transmit a random access preamble in a first message of the 4-step RACH procedure (Msg1, a.k.a. Physical RACH, PRACH) to wireless network node 120, such as a gNB. UE 110 may for example transmit a specific preamble to wireless network node 120 via PRACH using a specific resource, such as a RACH occasion. At step 220, wireless network node 120 may transmit, responsive to receiving the random access preamble, a random access response message, which may comprise the detected preamble identity, the time-advance command, a Temporary Cell Radio Network Temporary Identifier, TC-RNTI, and an Uplink, UL, grant for the transmission of a connection request, e.g., a Msg3 on PUSCH. The random access response message may be a second message (Msg2) of the 4-step RACH procedure.

At step 230, UE 110 may respond to the random access response message by transmitting the connection request. The connection request may be a RRC request. The connection request may be transmitted in a third message (Msg3) of the 4-step RACH procedure.

For instance, the connection request may be transmitted over the PUSCH scheduled in the UL grant, possibly with an identity for contention resolution. At step 240, wireless network node 120 may transmit, responsive to receiving the connection request, a contention resolution message as a fourth message (Msg4) of the 4-step RACH procedure. The contention resolution message may be a setup message, like RRC setup message. For instance, wireless network node 120 may transmit the contention resolution message with the identity for contention resolution.

After reception of the contention resolution message, UE 110 may transmit an acknowledgement on a Physical Uplink Control Channel, PUCCH, if the identity for contention resolution of UE 110 was carried in the contention resolution message, thereby completing the 4-step RACH procedure.

In some example embodiments, there may also a preliminary step of transmitting and receiving a Synchronization Signal Block, SSB, prior to step 210. That is, downlink beam sweeping may be performed prior to step 210, which may not be formally a part of the RACH procedure. As a result of this preliminary step, UE 110 may select an index of the preferred SSB beam and decode the associated Physical Broadcast Channel, PBCH, for a Master Information Block, MIB, System Information Block, SIB, and so on. The index may also be used by LTE 110 to identify a suitable RACH occasion for the transmission of the random access preamble, such as in Msg1, according to the SSB-to-RACH occasion mapping conveyed by SIB1. Wireless network node 120 may then use the SSB beam index selected by UE 110 for transmission of the random access response message, such as Msg2.

At least some example embodiments of the present disclosure relate to CE features and may be exploited for example in 5G/NR. For instance, the at least one CE feature may comprise number of repetitions, inter-slot frequency hopping and/or spectral shaping. In case of spectral shaping, the transmitted signal may be filtered to obtain a lower Peak to Average Power Ratio, PAPR, or a lower Cubic Metric, CM. Lower CM further entails lower Maximum Power Reduction, MPR, and hence higher maximum transmission power. Spectral shaping filtering may be done either in time or frequency domain. Spectral shaping operation modes may comprise spectral shaping with spectrum extension, spectral shaping without spectrum extension and no shaping. Spectral shaping may be with, or without, spectrum extension and implemented using Frequency Domain Spectral Shaping, FDSS.

More specifically, in some example embodiments, at least one CE feature may be considered for a connection request during random access, like a third message of a 4-step random access procedure (Msg3), and for allocation of a right amount of uplink resources for connection requests. As an example, allocation of resources, like spectral shaping factor and/or the number of Msg3 repetitions, may be based on establishing a shared knowledge about the coverage of UE 110, wherein the shared knowledge is between wireless network node 120, such as a gNB, and UE 110. The shared knowledge may be assigned based on measurements of wireless network node 120 during random access, e.g., on PRACH.

The allocation of uplink resources for connection requests may be assigned to LTE 110 by wireless network node 120 explicitly in a random access response, like a second message of the 4-step random access procedure (Msg2). Alternatively, the allocation may be assigned implicitly by relying on an indirect shared knowledge of the coverage situation of UE 110. The indirect shared knowledge may be implemented by establishing appropriate references, e.g., based on propagation delay estimation or path loss measurement that can be compared to a threshold. UE 110 and wireless network node 120 may independently identify the exact configuration of uplink resources for a connection request based on the actual need for coverage enhancement of UE 110 that is required in a given situation. In case of the indirect shared knowledge approach, there is no need to establish a communication channel between LTE 110 and wireless network node 120 to exchange information directly. For example, the number of Msg3 repetitions might not be provided explicitly.

The shared knowledge may be achieved by means of one or more threshold values configurable, e.g., by wireless network node 120 using a SIB1, as well as one or more shared parameter values known by both UE 110 and wireless network node 120. Alternatively, the shared knowledge may be based on wireless network node 120 configuring candidate values for the number of connection request repetitions, and then using an implicit indication, such as re-purposing Modulation and Coding Scheme, MCS, field of a random access response, of the value to be used. Hence, the shared knowledge may result in configuring the number of repetitions based on measurements of wireless network node 120 during the random access procedure, e.g., on PRACH.

In general, for scheduling the resources for the connection request, like 4-step RACH-Msg3, wireless network node 120 may need to assign the configuration needed for the given CE UE, like UE 110. For the configuration, wireless network node 120 may need to further consider the radio conditions of UE 110 along with resource efficiency and power consumption of wireless network node 120, which may be challenging due to the following reasons:
- if the same cell-specific CE configuration (e.g., in form of number of repetitions or spectral shaping factor) is provided by wireless network node 120 via an implicit and/or explicit signalling for all the UEs in the cell (i.e., without considering UE-specific differences of the channel conditions), it may lead either to potential unnecessary resource allocation and collisions of the connection requests (if the configuration is determined for the worse UEs) or unsuccessful random access procedure (if the configuration is determined for an average UE requiring coverage features);
- if wireless network node 120 configures the CE feature(s) (e.g., number of repetitions of the connection request or spectral shaping factor), based on the knowledge of condition of LTE 110, wherein the condition is estimated based on the transmission of the random access preamble only, such an approach would provide only a very rough understanding on the radio conditions of LTE 110;

- wireless network node 120 cannot determine UE's specific connection request performance, which may depend on the implementation of UE 110, based on the reception of the random access preamble, like PRACH preamble. The reason is that the reception of the random access preamble primarily allows to estimate the distance of UE 110 to wireless network node 120. Therefore, wireless network node 120 would be unable to account for implementation aspects of UE 110 (e.g., limitations on transmit performance of LTE 110) when assigning resources for the connection request;
- explicit CE feature configuration (e.g., based on a Timing Advance Command, TAC, provided in a random access response (Msg2) or pathloss) or implicit CE feature configuration (e.g., re-purposing a MCS field in a random access response) does not consider differences in the deployment scenario. For instance, different configuration may be needed for a small cell, large cell, etc.;
- for CE feature configuration additional signaling overhead due to reporting both successful and unsuccessful random access experience may need to be avoided as well as lack of sufficient knowledge for triggering UE reporting configuration at wireless network node 120. Therefore, it would be beneficial to enable activation and agreement from UE 110 prior to performing reporting.

Because of the above reasons, if wireless network node 120 configures a CE feature (spectrum extension and/or message repetition), the radio conditions at LTE 110, transmit constraints of UE 110 and channel conditions (e.g., contention-based random access collisions, shadowing) would only be considered partially. Thus, allocation of resources for spectrum extension and repetition would not be fully optimized.

Example embodiments of the present disclosure therefore provide a solution to trigger and/or configure at least one CE feature by LTE 110, such as a CE LTE, based on conditions during random access procedure. For instance, the at least one CE feature may comprise Type A Msg3 repetitions and/or different modes of spectral shaping in NR, which scale or adapt to different scenarios. Specifically, the assignment of number of repetitions or spectral shaping factor should consider radio conditions at LTE 110, transmit constraints of LTE 110 and channel conditions (e.g., CB-RACH collisions, shadowing). This way, it may be ensured that appropriate number of repetitions and/or spectral shaping factors are configured based on current channel characteristics and previous RACH experiences.

Although example embodiments of the present disclosure are applicable to any CE configuration and/or feature, spectrum shaping with extension is used in the following as an exemplary CE feature for transmission of the connection request (like Msg3).

Example embodiments make it possible for UE 110 to assess its overall experience and/or quality for transmission(s) of the connection request when at least one CE feature is active (e.g., spectral shaping). Moreover, UE 110 may subsequently report the assessed experience and/or quality to wireless network node 120 so that wireless network node 120 may optimize the resource allocation for transmission of the connection request for the given UE, like UE 110, and possibly other UEs it serves, in the future.

In some example embodiments, collection and reporting of experience related to transmission of the connection request by LTE 110 may be controlled by wireless network node 120, for example by means of a dedicated configuration. Said control may comprise triggering all CE LTEs or a group of CE UEs, based on a set of triggering events and/or conditions, to transmit a random access channel experience report, like an experience and/or quality report related to transmission of the connection request. Triggering of collection and reporting may be done together or separately. A configured UE or a group of UEs may then collect and perform reporting of random access channel experience and/or quality following successful attachment to wireless network node 120, i.e., after determining that a random access procedure was successful.

The random channel experience report of UE 110 may then be, after determining that a random access procedure with wireless network node 120 has been eventually performed successfully, used by wireless network node 120 to optimize the random access channel configuration for the given UE, like UE 110, and other UEs in its controlled cells. This enables improved random access channel configuration, which may further lead to better performance and/or reducing collisions (e.g., when random access is performed and at least one CE feature is activated). The improved random access channel configuration may be for random access of all configured UEs, wherein the configured UEs may comprise UEs that have done the reporting. However, in some example embodiments, the configured UEs might not comprise at least one UE that has done the reporting. In some example embodiments, it may be assumed that all improved CE features come at the cost of additional random access channel resource usage.

In some example embodiments of the present disclosure, UE 110 may generate, at a first step, a random access channel experience report after applying a first resource configuration to transmit a connection request. The random access channel experience report may be a CE RACH experience report and the first resource configuration to transmit a connection request may be a CE random access Msg3 resource configuration to transmit Msg3.

After receiving a random access response, UE 110 may be configured with at least one CE feature and perform the transmission of the connection request. For instance, after receiving Msg2, a CE UE (i.e., a LTE configured with a CE feature) may perform Msg3 transmission(s) with a spectral shaping factor in accordance with the allocated resources. Resource allocation may consider a set of coverage specific parameters, wherein the set of coverage specific parameters may be based on pathloss and/or TAC configuration or it may be configured implicitly via re-purposing information fields in a random access response message for spectral shaping factor.

UE 110 may for example attempt a transmission of a connection request (Msg3) with the spectral shaping factor and it may result in either one of the following cases:
- Case 1: UE 110, such as a CE UE, may experience a successful random access procedure without re-transmitting the connection request with a configured CE feature. That is, UE 110 may receive a contention resolution message (Msg4), which means that an acknowledgement is received from wireless network node 120. In such a case, UE 110 may not generate the random channel experience report to the network;
- Case 2: UE 110 may experience an unsuccessful random access procedure. That is, UE 110 may determine that the random access procedure was unsuccessful. In such a case, UE 110 may generate the random channel experience report and store the report to its memory to be later reported to wireless network node 120. UE 110 may for example transmit the report after determining that another random access procedure with wireless network node 120 was successful. Said another random access procedure may be a subsequent procedure compared to the unsuccessful random access procedure. That is, said another random access procedure may be performed after the unsuccessful random access procedure.

In some example embodiments, the random access channel experience report, i.e., the CE RACH experience report, may comprise at least one of the following information:
- a random access channel index, like RACH index of DL SSB;
- number of preambles transmitted, like number of preambles transmitted corresponding to SSBs;
- information related to repetition of a connection request, like information related to Msg3 repetition, comprising at least one of the following:
   - number of Msg3 repetitions attempted per SSB ID;
   - number of Msg3 re-transmissions performed during the successful RACH attempt;
   - number of Msg3 repetitions performed during the successful RACH attempt;
   - number of configured Type A PUSCH repetitions for Msg3;
   - Msg3 payload size;
- power ramp-up range, e.g., a gap in dB between initial Msg1/Msg3 Tx power and the Tx power of Msg1/Msg3 for the successful RACH;
- Energy Per Resource Element, EPRE, like Msg3 EPRE of the successful RACH and last unsuccessful RACH; and
- information related to spectral shaping, comprising at least one the following:
   - used spectral shaping factor;
   - configured spectral shaping factor;
   - spectrum extension used or not.

At a second step, LTE after storing the random access channel experience report 110 may determine whether a triggering criterion, such as a RACH experience reporting criterion is met. UE 110 may determine whether the triggering criterion is met as defined in standard specifications or configured. If the triggering criterion is met, UE 110 may transmit the random access channel experience report to wireless network node 120. UE 110 may transmit the report when it is in the RRC connected mode. That is, UE 110 may move to the RRC connected mode after completing a random access procedure successfully and transmit the report when it is in the RRC connected mode. LTE 110 may transmit the report via RRC signalling or in a Medium Access Control Control Element, MAC CE.

The triggering criterion for transmitting the report may comprise at least one of the following:
- a random access failure in a previous random access procedure with a CE attempt took place and a need for a new random access procedure is detected. That is, the random access procedure was detected as unsuccessful and a need for said another random access procedure is detected. For instance, the use case may be that the RACH failure comprises that the configured Msg3 with CovEnh feature was transmitted but Msg4 was not received;
- downlink control information is received, said downlink control information indicating that the triggering condition is met. For instance, the RACH experience reporting may be triggered after receiving a DCI 0_0 with Cyclic Redundancy Check, CRC, scrambled with a TC-RNTI, which leads to re-transmission of Msg3;
- a number of unsuccessful random access procedures is greater than a threshold. That is, a number of failing attempts is greater than a threshold. The threshold may be configured by network, for example.

In some example embodiments, UE 110 may indicate that the random access channel experience report is available to wireless network node 120, for example if any the triggering criteria is met. UE 110 may indicate the availability of the report, e.g., in the RACH success message.

At a third step, wireless network node 120 may optimize CE resource configuration based on the random access channel experience report received from LTE 110. Wireless network node 120 may consider at least the received report to discriminate the reason(s) of the past failures of transmissions of connection requests (Msg3) and defining new potential configuration and activation of CE features, such as RACH Msg3 repetitions/spectrum shaping, associated with current coverage specific parameter(s) that are known at wireless network node 120 during the course of random access operations. Hence, configuration and activation of CE features for random access would be based on the random access experience report sent by UE 110 in addition to measurements performed by wireless network node 120, if any.

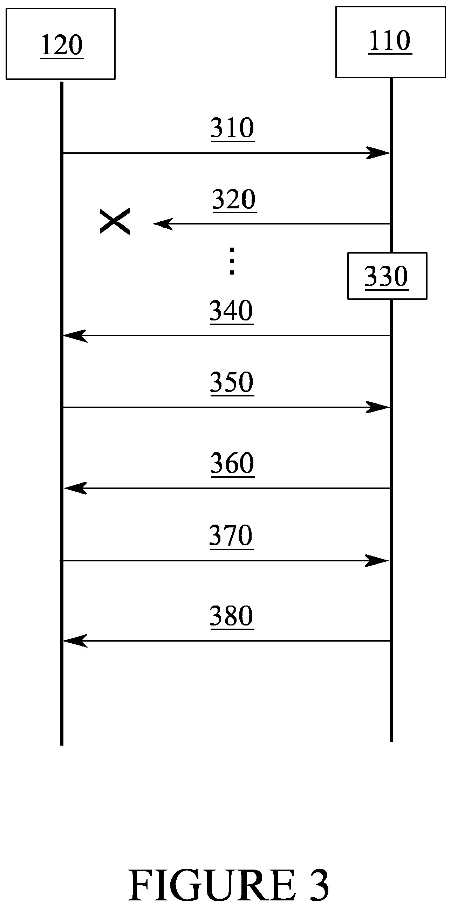

FIGURE 3 illustrates a first signaling graph in accordance with at least some example embodiments. On the vertical axes are disposed, from the left to the right, UE 110 and wireless network node 120 of FIGURE 1. Time advances from the top towards the bottom. FIGURE 3 illustrates a 4-step random access procedure, wherein a transmission of a random access preamble (Msg1) may be unsuccessful.

At step 310, wireless network node 120 may transmit a configuration to LTE 110, the configuration configuring the triggering criterion for transmitting the random access channel experience report. Wireless network node 120 may transmit the configuration via higher layer signaling, e.g., SIB1.

At step 320, UE 110 may transmit a random access preamble (Msg1), but the transmission may fail. UE 110 may determine that the random access procedure with wireless network node 120 was unsuccessful, e.g., by detecting that no random access response (Msg2) is received responsive to the transmitted random access preamble. That is, UE 110 may determine that the random access procedure with wireless network node 120 was unsuccessful by determining that a transmission of the random access preamble was not successful.

At step 330, UE 110 may generate and store a random access channel experience report. UE 110 may hence store the report responsive to or based on determining that the random access procedure with wireless network node 120 was unsuccessful.

At step 340, UE 110 may transmit another random access preamble, during another random access procedure. UE 110 may start said another random access procedure after determining that the initial random access procedure, started at step 320, with wireless network node 120 was unsuccessful. Said another random access procedure may be a 4-step random access procedure as well. In some example embodiments, UE 110 may apply power ramping for said another random access preamble at step 340. That is, transmission power may be ramped enough, or the channel conditions may be temporarily good enough, so that the transmission of said another random access preamble is successful at step 340, even though the transmission of the random access preamble was not successful at step 320.

At step 350, wireless network node 120 may transmit a random access response (Msg2) indicating that the transmission of said another random access preamble was successful. LTE 110, such as a CE LTE, may receive for example a spectrum shaping factor with extension, or without, in the random access response. At step 360, UE 110 may transmit a connection request (Msg3) to wireless network node, possibly using the configured spectrum shaping factor.

After successful transmission of the connection request, wireless network node 120 may, at step 370, transmit a contention resolution message (Msg4) to LTE 110. LTE 110 may determine after receiving the contention resolution message that said another random access procedure with wireless network node 120 was successful (RACH completed). In some example embodiments, UE 110 may determine that the random access procedure with a wireless network node was recurrently unsuccessful at step 310. That is, multiple transmissions of Msg1 may fail, but eventually a transmission of Msg1 may be successful.

Moreover, UE 110 may transmit, at step 380, the random access channel experience report after determining that said another random access procedure with wireless network node 120 was successful. The report may be transmitted via RRC signalling, as UE 110 has moved to the RRC connected mode after receiving the contention resolution message.

After receiving the report, wireless network node 120 may discriminate the reason for the past failures by learning based at least on the content of the report. Wireless network node 120 may thus decide whether to configure at least one CE feature based on the report, e.g., whether to adjust the at least one CE feature. For instance, wireless network node 120 may update the resources (e.g., in frequency domain) for the usage of at least one CE feature (e.g., repetition or spectrum shaping with extension) and decide whether to reduce, increase or apply no change on the at least one CE feature (e.g., spectral shaping factor) based on categorizing the failure reasons and configured implementation.

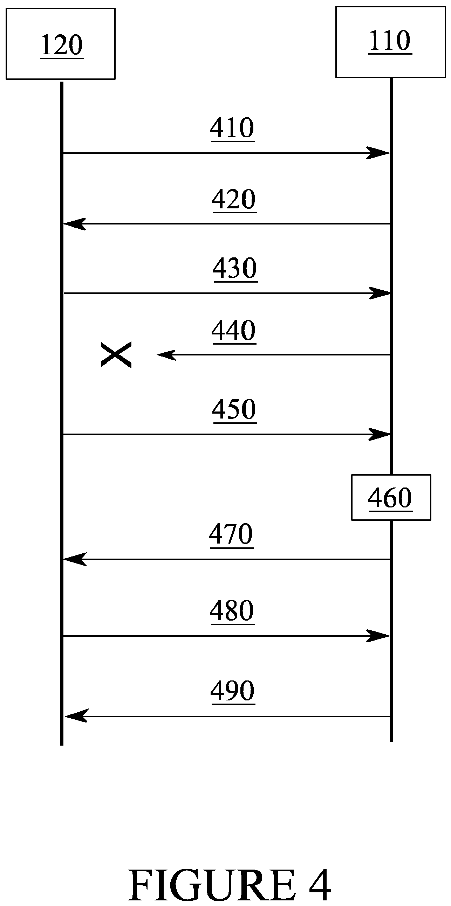

FIGURE 4 illustrates a first signaling graph in accordance with at least some example embodiments. On the vertical axes are disposed, from the left to the right, UE 110 and wireless network node 120 of FIGURE 1. Time advances from the top towards the bottom. FIGURE 4 illustrates a 4-step random access procedure, wherein a transmission of a connection request (Msg3) may be unsuccessful.

Step 410 may correspond to step 310 illustrated in FIGURE 3. At step 420, UE 110 may transmit a random access preamble (Msg1) to wireless network node 120 and receive, at step 430, a random access response (Msg2) in response to the random access preamble.

At step 440, UE 110 may transmit a connection request (Msg3) to wireless network node 120, but the transmission may fail. LTE 110 may determine that the random access procedure with wireless network node 120 was unsuccessful, e.g., by detecting that no contention resolution message (Msg4) is received responsive to the transmitted connection request. That is, UE 110 may determine that the random access procedure with wireless network node 120 was unsuccessful by determining that a transmission of the connection request was not successful.

Similarly, wireless network node 120 may determine that the random access procedure with UE 110 was unsuccessful if it does not receive the connection request (Msg3) responsive to the random access response (Msg2). After determining that the random access procedure with UE 110 was unsuccessful, wireless network node 120 may transmit, at step 450, transmit a CE configuration to UE 110 for transmission of another connection request. The CE configuration may be transmitted in Downlink Control Information, DCI. The DCI may trigger generation and storing of the random access channel experience report at LTE 110. That is, after determining that the random access procedure with UE 110 was unsuccessful, wireless network node 120 may trigger the reporting and UE 110 may generate and store the report (e.g., after receiving DCI 0_0 with CRC scrambled with TC-RNTI). Step 460 may correspond to step 330 illustrated in FIGURE 3 otherwise.

At step 470, UE 110 may retransmit the connection request using the CE configuration. As the connection request is retransmitted, another random access procedure may be interpreted to have started. Steps 480 and 490 may then correspond to steps 370 and 380 illustrated in FIGURE 3, respectively, and wireless network node 120 may perform the same actions after receiving the report.

Example embodiments of the present disclosure therefore provide technical effects for both, UE 110 and wireless network node 120. Technical effects for wireless network node 120 comprise at least the following:
- environment-based configuration of CE features for the connection request may be improved considering different reasons for an unsuccessful random access procedure (RACH failure);
- scheduling of transmission according to CE features may be based on learning previous determined parameters at wireless network node 120 and also on the random access channel experience report of LTE 110;
- The random access channel experience reporting from LTE 110 may be used to optimize assigning the number of resource block, such as Physical Resource Blocks, PRBs, assigned for RA Msg3.

Technical effects for LTE 110 then comprise at least that a transmission performed according to previously applied CE features, e.g., RA Msg3 repetition or spectrum shaping, may be taken into account, which may lead to more reliable CE feature configuration for the upcoming random access procedures.

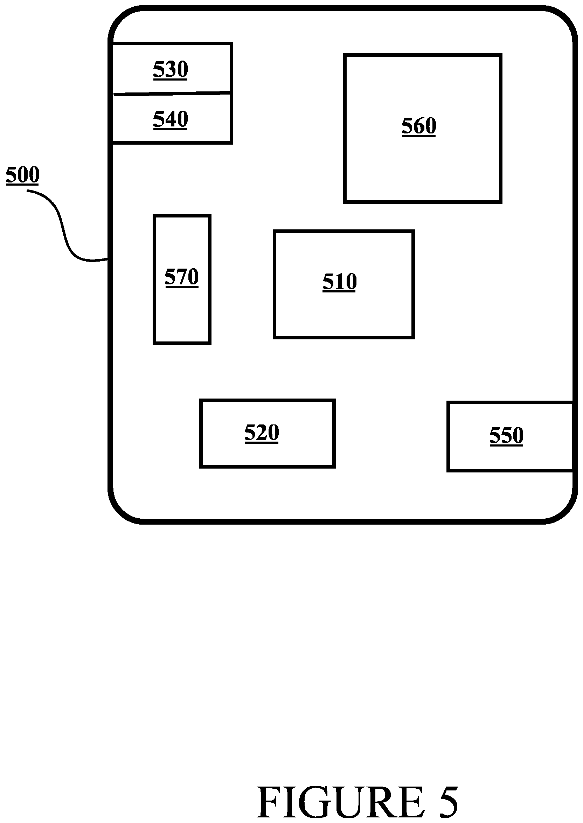

FIGURE 5 illustrates an example apparatus capable of supporting at least some example embodiments. Illustrated is device 500, which may comprise, for example, UE 110 or wireless network node 120, or a control device configured to control the functioning thereof, possibly when installed therein. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core produced by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with Global System for Mobile communication, GSM, Wideband Code Division Multiple Access, WCDMA, Long Term Evolution, LTE, and/or 5G/NR standards, for example.

Device 500 may comprise a Near-Field Communication, NFC, transceiver 550. NFC transceiver 550 may support at least one NFC technology, such as Bluetooth, Wibree or similar technologies.

Device 500 may comprise User Interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to accept incoming telephone calls, to originate telephone calls or video calls, to browse the Internet, to manage digital files stored in memory 520 or on a cloud accessible via transmitter 530 and receiver 540, or via NFC transceiver 550, and/or to play games.

Device 500 may comprise or be arranged to accept a user identity module 570. User identity module 570 may comprise, for example, a Subscriber Identity Module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIGURE 5. For example, where device 500 comprises a smartphone, it may comprise at least one digital camera. Some devices 500 may comprise a back-facing camera and a front-facing camera, wherein the back-facing camera may be intended for digital photography and the front-facing camera for video telephony. Device 500 may comprise a fingerprint sensor arranged to authenticate, at least in part, a user of device 500. In some example embodiments, device 500 lacks at least one device described above. For example, some devices 500 may lack a NFC transceiver 550 and/or user identity module 570.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the example embodiment, various ways of interconnecting at least two of the aforementioned devices may be selected without departing from the scope of the example embodiments.

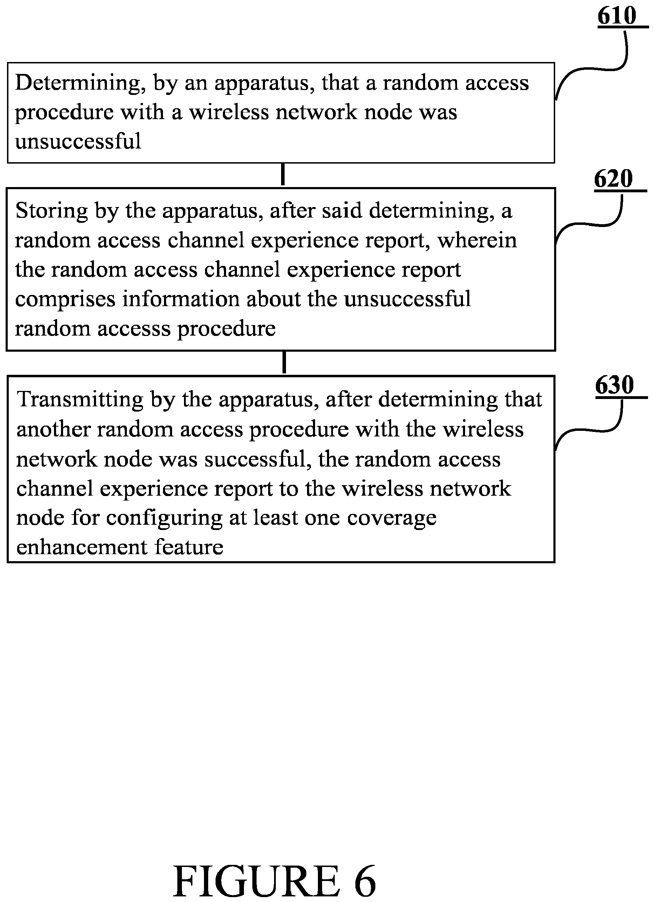

FIGURE 6 is a flow graph of a first method in accordance with at least some example embodiments. The apparatus of the first method may be UE 110 or a control device configured to control the functioning thereof, possibly when installed therein. That is, the steps of the first method may be performed by, i.e., the apparatus of the first method may be, UE 110 or by a control device configured to control the functioning thereof, possibly when installed therein.

The first method may comprise, at step 610, determining, by an apparatus, that a random access procedure with a wireless network node was unsuccessful. The first method may also comprise, at step 620, storing by the apparatus, after said determining, a random access channel experience report, wherein the random access channel experience report comprises information about the unsuccessful random access procedure. Finally, the first method may comprise, at step 630, transmitting by the apparatus, after determining that another random access procedure with the wireless network node was successful, the random access channel experience report to the wireless network node for configuring at least one coverage enhancement feature.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, LTE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, LTE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks, wherein random access may be used with coverage enhancement.

### ACRONYMS LIST

- 3GPP: 3rd Generation Partnership Project
- CE: Coverage Enhancement
- CM: Cubic Metric
- CP: Cyclic Prefix
- CRC: Cyclic Redundancy Check
- DCI: Downlink Control Information
- DFT-s: Discrete Fourier Transform spread
- EPRE: Energy Per Resource Element
- FDD: Frequency Division Duplexing
- FDSS: Frequency Domain Spectral Shaping
- GSM: Global System for Mobile communication
- IAB: Integrated Access and Backhaul
- IoT: Internet of Things
- LTE: Long-Term Evolution
- M2M: Machine-to-Machine
- MAC CE: Medium Access Control Control Element
- MCS: Modulation and Coding Scheme
- NFC: Near-Field Communication
- OFDM: Orthogonal Frequency Division Multiplexing
- MIB: Master Information Block
- MIMO: Multi-Input Multi-Output
- MPR: Maximum Power Reduction
- PAPR: Peak to Average Power Ratio
- PBCH: Physical Broadcast Channel
- PRACH: Physical RACH
- PRB: Physical Resource Block
- PUCCH: Physical Uplink Control Channel
- PUSCH: Physical Uplink Shared Channel
- RACH: Random Access Channel
- RAT: Radio Access Technology
- RRC: Radio Resource Control
- RSRP: Reference Signal Received Power
- SIB: System Information Block
- SRS: Sounding Reference Signal
- SSB: Synchronization Signal Block
- TAC: Timing Advance Command
- TC-RNTI: Temporary Cell Radio Network Temporary Identifier
- TRP: Transmission and Reception Point
- UE: User Equipment
- UL: Uplink
- UI: User Interface
- WCDMA: Wideband Code Division Multiple Access
- WiMAX: Worldwide Interoperability for Microwave Access
- WLAN: Wireless Local Area Network

**REFERENCE SIGNS LIST**

| | |
|---|---|
| 110 | UE |
| 112, 114 | Beams |
| 120 | Wireless network node |
| 125, 135 | Wired interfaces |
| 130 | Core Network |
| 210 - 240 | Steps in FIGURE 2 |
| 310-380 | Steps in FIGURE 3 |
| 410-490 | Steps in FIGURE 4 |
| 500 - 570 | Structure of the apparatus of FIGURE 5 |
| 610-630 | Phases of the first method in FIGURE 6 |

## Claims

1. An apparatus, comprising:
means for determining that a random access procedure with a wireless network node was unsuccessful;
means for storing, after said determining, a random access channel experience report, wherein the random access channel experience report comprises information about the unsuccessful random access procedure; and
means for transmitting, after determining that another random access procedure with the wireless network node was successful, the random access channel experience report to the wireless network node for configuring at least one coverage enhancement feature.

2. The apparatus according to claim 1, further comprising:
means for determining, after said storing, that a triggering criterion for transmitting the random access channel experience report is met before the apparatus is moved to a Radio Resource Control, RRC, connected mode; and
wherein said means for transmitting comprises means for transmitting the random access channel experience report when the apparatus is in the RRC connected mode.

3. The apparatus according to claim 2, wherein the random access channel experience report is transmitted via RRC signalling or in a Medium Access Control Control Element, MAC CE.

4. The apparatus according to claim 2 or claim 3, wherein the triggering criterion is met when:
the random access procedure was detected as unsuccessful and a need for said another random access procedure is detected; or
downlink control information is received from the wireless network node, said downlink control information indicating that the triggering criterion is met; or
it is determined that a number of unsuccessful random access procedures is greater than a threshold.

5. The apparatus according to any of claims 2 to 4, further comprising:
means for receiving a configuration from the wireless network node, the configuration configuring the triggering criterion for transmitting the random access channel experience report.

6. The apparatus according to any of the preceding claims, further comprising:
means for indicating, to the wireless network node, that the random access channel experience report is available.

7. The apparatus according to any of the preceding claims, wherein said means for determining that the random access procedure with the wireless network node was unsuccessful further comprises means for determining that a transmission of a random access preamble was not successful, and the apparatus further comprises:
means for receiving in a random access response during said another random access procedure, from the wireless network node, a coverage enhancement configuration for transmission of a connection request; and
means for transmitting, to the wireless network node, the connection request using the coverage enhancement configuration.

8. The apparatus according to any of claims 1 to 6, wherein said means for determining that the random access procedure with the wireless network node was unsuccessful further comprises means for determining that a transmission of a connection request was not successful, and the apparatus further comprises:
means for receiving in downlink control information, from the wireless network node, a coverage enhancement configuration for transmission of another connection request; and
means for transmitting, to the wireless network node, said another connection request using the coverage enhancement configuration.

9. The apparatus according to any of the preceding claims, wherein the random access channel experience report comprises at least one of a random access channel index, number of preambles transmitted, information related to repetition of a connection request, power ramp-up range, energy per resource element and information related to spectral shaping.

10. The apparatus according to any of the preceding claims, wherein the random access procedure is a 4-step random access procedure, wherein a first message of the random access procedure comprises a random access preamble and a third message of the random access procedure comprises a connection request.

11. The apparatus according to any of the preceding claims, wherein said means for determining that the random access procedure with the wireless network node was unsuccessful further comprises means for determining that the random access procedure with the wireless network node was recurrently unsuccessful.

12. An apparatus, comprising:
means for receiving a random access channel report from a user equipment, wherein the random access channel experience report comprises information about an unsuccessful random access procedure with the user equipment; and
means for deciding whether to configure at least one coverage enhancement feature based on the random access channel experience report.

13. A method, comprising:
determining, by an apparatus, that a random access procedure with a wireless network node was unsuccessful;
storing by the apparatus, after said determining, a random access channel experience report, wherein the random access channel experience report comprises information about the unsuccessful random access procedure; and
transmitting by the apparatus, after determining that another random access procedure with the wireless network node was successful, the random access channel experience report to the wireless network node for configuring at least one coverage enhancement feature.

14. A method, comprising:
receiving, by an apparatus, a random access channel report from a user equipment, wherein the random access channel experience report comprises information about an unsuccessful random access procedure with the user equipment; and
deciding, by the apparatus, whether to configure at least one coverage enhancement feature based on the random access channel experience report.

15. A computer readable medium comprising instructions that, when executed by a processor, cause the processor to perform at least a method according to claim 13 or claim 14.
